# EUROPEAN PATENT SPECIFICATION

(11) **EP 2 444 822 B1**
(45) Date of publication and mention of the grant of the patent: **12.12.2018**
(21) Application number: 11008273.2
(22) Date of filing: 13.10.2011
(51) Int. Cl.: G01S 19/48

(54) **Method and system for computing universal hybrid navigation information for a GNSS enabled device**
Verfahren und System zum Berechnen der universalen Hybridnavigationsinformation für ein GNSS-aktiviertes Gerät
Procédé et système pour calculer des informations de navigation hybrides pour un dispositif à fonction GNSS

(30) Priority: 25.10.2010 US 406433 P; 11.02.2011 US 201113026050
(43) Date of publication of application: 25.04.2012
(60) Divisional application: 13005544.5
(73) Proprietor: Avago Technologies General IP (Singapore) Pte. Ltd., Singapore 768923 (SG)
(72) Inventor: Van Diggelen, Frank, 95120 San Jose CA (US)
(74) Representative: Jehle, Volker Armin

(56) References cited:
- EP-A2- 1 813 958
- US-A1- 2002 132 626
- US-A1- 2004 138 812
- US-A1- 2005 064 877
- US-B1- 6 246 861

## Description

### CROSS-REFERENCE TO RELATED APPLICATIONS

This patent application makes reference to, claims priority to, and claims benefit from United States Provisional Application Serial No. 61/406,433, which was filed on October 25, 2010.

US 2002/132626 A1 discloses a mobile handset equipped with both position calculation means using radio waves from GPS satellites and position calculation means using RF carriers from cellular base stations. Positioning results obtained from both of these position calculation means are combined and weighted with GPS positioning reliability and cellular positioning reliability, respectively, and a weighted mean of these results is then output as a final position calculation result.

EP 1813958 A2 discloses to aid a Satellite Positioning System (SPS) receiver of a platform with a data interface to the platform data from a platform data bus, wherein the SPS receiver can be used to track the location of the platform, the data interface facilitates access by the SPS receiver to the data of the platform, and the SPS receiver in turn could provide SPS data, such as position, speed, and heading, to the platform.

### FIELD OF THE INVENTION

Certain embodiments of the invention relate to signal processing for global navigation satellite systems (GNSS). More specifically, certain embodiments of the invention relate to a method and system for computing universal hybrid navigation information for a GNSS enabled device.

### BACKGROUND OF THE INVENTION

Location-based services are emerging as a new type of value-added service provided by mobile communication network. Location-based services are mobile services in which the user location information is used in order to enable various location-based applications such as, for example, enhanced 911 (E-911), location-based 411, location-based messaging and/or location-based friend finding services.

A location of a mobile device may be determined in different ways such as, for example, using network-based technology, using terminal-based technology, and/or hybrid technology (a combination of the former technologies). Many positioning technologies such as, for example, Time of Arrival (TOA), Observed Time Difference of Arrival (OTDOA), Enhanced Observed Time Difference (E-OTD) as well as the Global navigation satellite-based systems (GNSS) such as GPS, GLONASS, Galileo, and/or Assisted-GNSS (A-GNSS), are in place to estimate the location (latitude and longitude) of the mobile device and convert it into a meaningful X, Y coordinate for LBS applications. A-GNSS technology combines satellite positioning and communication networks such as mobile networks to reach performance levels allowing the wide deployment of Location-Based Services.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and method is provided for computing navigation information for a GNSS enabled device as set forth in the appended claims.

According to an aspect, a method for processing signals is provided, the method comprising among others:
in a global navigation satellite system (GNSS) enabled device that is operable to handle a plurality of sensors:
collecting GNSS measurements and navigation related non-GNSS sensor data;
formatting said collected navigation related non-GNSS sensor data into a data format that is compliant with a format of said collected GNSS measurements; and
computing by a single function, navigation information for said GNSS enabled device utilizing said collected GNS measurements and said formatted non-GNSS sensor data.

Advantageously, said plurality of sensors comprise at least two of a cellular radio, a Wireless LAN (WiFi) radio, a Bluetooth radio, an FM radio, a magnetic sensor, a motion sensor, a rate gyroscope, a pressure sensor, an image sensor, and/or a sonar sensor.

The method further comprises estimating measurement errors in said collected navigation related non-GNSS sensor data.

The method further comprises determining measurement accuracy for said collected navigation related non-GNSS sensor data based on said measurement error estimation.

The method further comprises removing erroneous measurements from said collected navigation related non-GNSS sensor data based on said determined measurement accuracy.

The method further comprises selectively adopting said collected navigation related non-GNSS sensor data based on said determined measurement accuracy.

The method further comprises time tagging said adopted navigation related non-GNSS sensor data.

The method further comprises combining said collected GNSS measurements with said time tagged navigation related non-GNSS sensor data to compute said navigation information, by said single function, for said GNSS enabled device.

Advantageously, the method further comprises calibrating said collected navigation related non-GNSS sensor data based on said computed navigation information for said GNSS enabled device.

Advantageously, the method further comprises calibrating one or more of said plurality of sensors based on said computed navigation information for said GNSS enabled device.

According to an aspect, a system for processing signals is provided, the system comprising among others: one or more circuits for use in a global navigation satellite system (GNSS) enabled device that is operable to handle a plurality of sensors, said one or more circuits being operable to:
collect GNSS measurements and navigation related non-GNSS sensor data;
format said collected navigation related non-GNSS sensor data into a data format that is compliant with a format of said collected GNSS measurements; and
compute by a single function, navigation information for said GNSS enabled device utilizing said collected GNS measurements and said formatted non-GNSS sensor data.

Advantageously, said plurality of sensors comprise at least two of a cellular radio, a Wireless LAN (WiFi) radio, a Bluetooth radio, an FM radio, a magnetic sensor, a motion sensor, a rate gyroscope, a pressure sensor, an image sensor, and/or a sonar sensor.

Said one or more circuits are operable to estimate measurement errors in said collected navigation related non-GNSS sensor data.

Said one or more circuits are operable to determine measurement accuracy for said collected navigation related non-GNSS sensor data based on said measurement error estimation.

Said one or more circuits are operable to remove erroneous measurements from said collected navigation related non-GNSS sensor data based on said determined measurement accuracy.

Said one or more circuits are operable to selectively adopt said collected navigation related non-GNSS sensor data based on said determined measurement accuracy.

Said one or more circuits are operable to time tag said adopted navigation related non-GNSS sensor data.

Said one or more circuits are operable to combine said collected GNSS measurements with said time tagged navigation related non-GNSS sensor data to compute said navigation information, by said single function, for said GNSS enabled device.

Advantageously, said one or more circuits are operable to calibrate said collected navigation related non-GNSS sensor data based on said computed navigation information for said GNSS enabled device.

Advantageously, said one or more circuits are operable to calibrate one or more of said plurality of sensors based on said computed navigation information for said GNSS enabled device.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a diagram illustrating an exemplary communication system that is operable to compute universal hybrid navigation information for a GNSS enabled device utilizing hybrid navigation related non-GNSS sensor data, in accordance with an embodiment of the invention.
FIG. 2 is a diagram illustrating an exemplary GNSS enabled device that is operable to incorporate hybrid navigation related non-GNSS sensor data to compute universal hybrid navigation information for the GNSS enabled device, in accordance with an embodiment of the invention.
FIG. 3 is a diagram illustrating an exemplary host CPU architecture of a GNSS enabled device for computing universal hybrid navigation information for the GNSS enabled device utilizing hybrid navigation related non-GNSS sensor data, in accordance with an embodiment of the invention.
FIG. 4 is a flow chart illustrating exemplary steps that may be performed by a GNSS enabled device to incorporate hybrid navigation related non-GNSS sensor data to conform GNSS application, in accordance with an embodiment of the invention.
FIG. 5 is a flow chart illustrating exemplary steps that may be performed by a GNSS enabled device to calibrate collected non-GNSS sensor data utilizing universal hybrid navigation information for the GNSS enabled device, in accordance with an embodiment of the invention.

### DETAILED DESCRIPTION OF THE INVENTION

Certain embodiments of the invention may be found in a method and system for computing universal hybrid navigation information for a GNSS enabled device. In various embodiments of the invention, a Global navigation satellite-based system (GNSS) enabled device that is operable to handle a plurality of sensors may take GNSS measurements on received GNSS signals. The GNSS measurements may be collected to compute navigation information such as position, velocity and/or time for the GNSS enabled device. The GNSS enabled device may also receive navigation related non-GNSS sensor data, which is referred to as non-GNSS measurement data that is taken or sensed on non-GNSS signals via at least two of the plurality of sensors. The collected navigation related non-GNSS sensor data may be automatically formatted into a data format that is similar to or is compliant with a format of the GNSS measurements. The formatted navigation related non-GNSS sensor data may be combined with the GNSS measurements to compute navigation information by a single function such as a single GNSS application regardless of sensor configurations or types. A sensor may be configured in various ways such as a cellular radio, a Wireless LAN (WLAN) of WiFi radio, a motion sensor, and/or a light sensor. The GNSS enabled device may estimate measurement errors in the collected navigation related non-GNSS sensor data to quantify or determine corresponding measurement accuracy. The collected navigation related non-GNSS sensor data with low measurement accuracy (more measurement errors) may be discarded so as to remove erroneous measurements from the collected navigation related non-GNSS sensor data. The collected navigation related non-GNSS sensor data with high measurement accuracy (less measurement errors) may be adopted for navigation information computation through the single GNSS application for the GNSS enabled device. The adopted navigation related non-GNSS sensor data may be time tagged and combined with the GNSS measurements to compute navigation information for the GNSS enabled device. The resulting computed navigation information may be utilized to calibrate collected non-GNSS sensor data and corresponding sensors when appropriate.

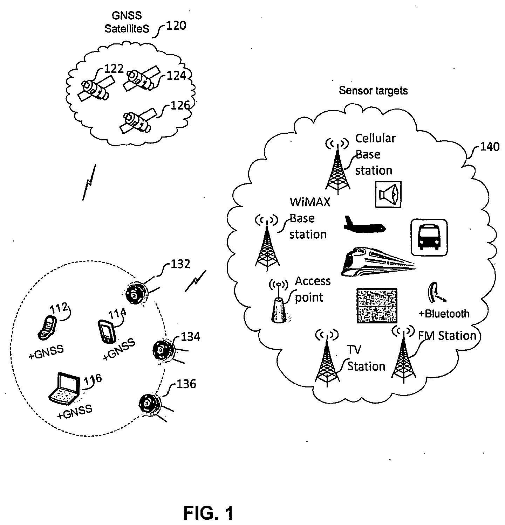

FIG. 1 is a diagram illustrating an exemplary communication system that is operable to compute universal hybrid navigation information for a GNSS enabled device utilizing hybrid navigation related non-GNSS sensor data, in accordance with an embodiment of the invention. Referring to FIG. 1, there is shown communication system 100. The communication system comprises GNSS enabled devices 112-116, GNSS satellites 120, sensors 132-136, and a plurality of sensor targets 140.

A GNSS enabled device such as the GNSS enabled device 112 may be communicatively coupled with one or more sensors such as the sensors 132-136. The GNSS enabled device 112 may comprise suitable logic, circuitry, interfaces and/or code that are operable to concurrently receive GNSS satellite broadcast signals from GNSS satellites in view such as, for example, the GNSS satellites 120, and sensor data collected from the plurality of sensor targets 140 via the sensors 132-136. The collected sensor data may also be named as non-GNSS measurement data or non-GNSS sensor data that is taken or sensed on appropriate non-GNSS signals via the sensors 132-136. The GNSS enabled device 112 may be operable to take various GNSS measurements such as pseudorange and/or carrier phase on the received GNSS signals. The GNSS measurements may be collected and stored to compute navigation information such as, for example, GNSS position, velocity and/or time (PVT), for the GNSS enabled device 112. For example, the GNSS enabled device 112 may be operable to run or execute a single function such as a GNSS application utilizing the stored GNSS measurements for navigation information computation. The GNSS application may comprise software libraries (executable) and/or codes that may be executed or run for given input that is read in accordance with a data format of GNSS measurements. The GNSS application may supply or output navigation information for the GNSS enabled device 112.

In an exemplary embodiment of the invention, the GNSS enabled device 112 may utilize the same GNSS application to incorporate or handle hybrid navigation related non-GNSS sensor data for navigation information computation. The GNSS application may be operable to calculate or determine navigation information for the GNSS enabled device 112 without knowing in advance a source from which the hybrid navigation related non-GNSS sensor data may have originated. The navigation related non-GNSS sensor data may be collected via one or more sensors 132-136 that may be configured in various ways. The sensors 132-136 may comprise suitable logic, circuitry, interfaces and/or code that are operable to collect data from the plurality of sensor targets 140. The sensors 132-136 may be configured as, for example, a cellular radio, a Wireless LAN (WiFi) radio, a Bluetooth radio, an FM radio, an accelerometer, a magnetic compass, a rate gyro, a terrain-model look-up table, an altimeter, a camera and/or a motion sensor. The sensor targets 140 may comprise outdoor and/or indoor physical objects, spaces and/or any other things that may be sensed by the sensors 132-136. For example, a sensor target may be an indoor access point, a cellular base station, a WiMAX base station, a FM station, a TV station, a Bluetooth headset, a map, a train station, a bus stop, an airport, light, voice, and/or devices that may transmit or indicate associated navigation information.

In an exemplary embodiment of the invention, the GNSS enabled device 112 may automatically format or map the collected navigation related non-GNSS sensor data to conform or fit a data format such as the GNSS measurement data format supported by the GNSS application. For example, in some instances the collected navigation related non-GNSS sensor data may comprise WiFi measurements. The GNSS enabled device 112 may convert the WiFi measurements to position data, velocity data and/or time data in accordance with the GNSS measurement data format. In this regard, the GNSS enabled device 112 may isolate or separate the use of the GNSS application from the underlying sensor-dependent software interfaces or infrastructures. The formatted navigation related non-GNSS sensor data, now in the GNSS measurement data format, may become input to the GNSS application. The GNSS enabled device 112 may maintain the same GNSS application for navigation information computation over GNSS measurement data and/or non-GNSS measurement data such as the collected hybrid navigation related non-GNSS sensor data regardless of corresponding sensor configurations or types. The resulting computed navigation information from the GNSS application may, therefore, be referred to as universal hybrid navigation information for the GNSS enabled device 112.

In an exemplary embodiment of the invention, the GNSS enabled device 112 may quantify measurement accuracy on the collected navigation related non-GNSS sensor data. In this regard, the GNSS enabled device 112 may determine or estimate measurement errors such as root mean squared error (RMSE) in the collected navigation related non-GNSS sensor data. The GNSS enabled device 112 may determine whether the collected navigation related non-GNSS sensor data are good or accurate for navigation information computation based on the corresponding measurement error estimates. For example, the collected navigation related non-GNSS sensor data with large measurement errors may be less accurate than the collected navigation related non-GNSS sensor data with less measurement errors. In this regard, the collected navigation related non-GNSS sensor data with low measurement accuracy may be discarded to remove erroneous measurements from the collected navigation related non-GNSS sensor data. The collected navigation related non-GNSS sensor data with high measurement accuracy may be adopted for navigation information computation. In this regard, the GNSS enabled device 112 may time tag or time stamp the adopted navigation related non-GNSS sensor data. The resulting time tagged or time stamped navigation related non-GNSS sensor data may become input to the GNSS application for navigation information computation. In this regard, the GNSS application may combine the time tagged navigation related non-GNSS sensor data with GNSS measurement data to compute universal hybrid navigation information for the GNSS enabled device 112.

In an exemplary embodiment of the invention, the GNSS enabled device 112 may calibrate collected navigation related non-GNSS sensor data and/or corresponding sensors utilizing universal hybrid navigation information supplied from the GNSS application. In this regard, the GNSS enabled device 112 may evaluate measurement accuracy of the universal hybrid navigation information to determine whether the navigation information output from the GNSS application may be adopted or utilized for sensor calibration. The universal hybrid navigation information with high measurement accuracy may be utilized to calibrate the collected navigation related non-GNSS sensor data and/or corresponding sensors. For example, in some instances, the GNSS enabled device 112 may comprise an accelerometer (a sensor) that may be utilized as a step counter. The step length utilized by the accelerometer may be initially unknown. When the GNSS enabled device 112 is outdoors with a clear view of the sky, the speed output from the GNSS application for the GNSS enabled device 112 may be with less measurement errors. The GNSS enabled device 112 may then utilize the speed output from the GNSS application to calibrate the step size of the accelerometer. In instances where the GNSS enabled device 112 is indoors without a clear view of the sky, the speed output from the GNSS application may be with large measurement errors. The GNSS enabled device 112 may stop utilizing the speed output from the GNSS application to calibrate the step size of the accelerometer.

A GNSS satellite such as the GNSS satellite 122 may comprise suitable logic, circuitry, interfaces and/or code that is operable to provide satellite navigational information to various GNSS receivers on earth. The GNSS satellite 122 may be operable to broadcast its own ephemeris periodically. For example, in instances where the GNSS satellite 122 is a GPS satellite, the GNSS satellite 122 may broadcast GPS ephemeris once every 30 seconds taking 18 seconds in all for a complete ephemeris transmission. The broadcast ephemeris may be utilized to calculate navigation information such as, for example, position, velocity, and clock information for GNSS receivers such as the GNSS enabled device 112. The GNSS satellite 122 may be operable to update ephemeris, for example, every two hours. The broadcast ephemeris may be valid for a limited time period such as, for example, 2 to 4 hours into the future (from the time of broadcast).

In an exemplary operation, a GNSS enabled mobile device such as the GNSS enabled mobile device 112 may be operable to concurrently receive GNSS satellite signals from the GNSS satellites 120 and non-GNSS sensor data collected via the sensors 132-136. The GNSS enabled mobile device 112 may take GNSS measurements on the received GNSS signals. The resulting GNSS measurement data may become input to the GNSS application for navigation information computation. The GNSS application may compute or output navigation information such as position, velocity and/or time (PVT) for the GNSS enabled mobile device 112. In various exemplary embodiments of the invention, the GNSS enabled mobile device 112 may track and collect navigation related non-GNSS sensor data via the sensors 132-136. The collected navigation related non-GNSS sensor data may be automatically converted or formatted to a format that is compatible with a format for the GNSS measurement data format. Measurement error such as RMSE in the collected navigation related non-GNSS sensor data may be determined or estimated to quantify or determine corresponding measurement accuracy. The GNSS enabled mobile device 112 may determine whether the collected navigation related non-GNSS sensor data are accepted or rejected for navigation information computation based on the corresponding measurement accuracy. For example, the collected navigation related non-GNSS sensor data with low measurement accuracy may be discarded to remove measurement errors from navigation information computation. The collected navigation related non-GNSS sensor data with high measurement accuracy may be time tagged or time stamped. The resulting time tagged or time stamped navigation related non-GNSS sensor data may become input to the GNSS application for navigation information computation. In this regard, the GNSS application may adopt non-GNSS measurement data such as the time tagged navigation related non-GNSS sensor data for navigation information computation though the same GNSS application regardless of where the non-GNSS measurement data comes from. The GNSS application may combine the GNSS measurement data with the non-GNSS measurement data such as the navigation related non-GNSS sensor data to enhance or improve the accuracy of navigation information computation. The resulting navigation information output from the GNSS application may be utilized to calibrate the collected non-GNSS sensor data and/or sensors when appropriate. For example, the GNSS enabled device 112 may comprise a magnetic compass (a sensor) that may be utilized as a direction finder. In some instances, the magnetic compass is with a bias, and the navigation information from the GNSS application may comprise a heading that is the direction in which the GNSS enabled device 112 is currently moving. In this regard, the enabled device 112 may utilize the heading output from the GNSS application to calibrate or compensate the bias of the magnetic compass, and thereby to improve heading accuracy of the magnetic compass.

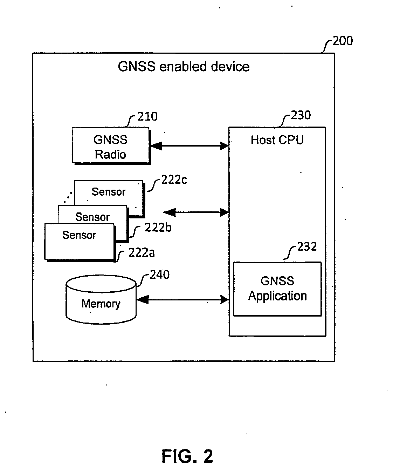

FIG. 2 is a diagram illustrating an exemplary GNSS enabled device that is operable to incorporate hybrid navigation related non-GNSS sensor data to compute universal hybrid navigation information for the GNSS enabled device, in accordance with an embodiment of the invention. Referring to FIG. 2, there is shown a GNSS enabled device 200. The GNSS enabled device 200 comprises a GNSS radio 210, a plurality of sensors 222a-222c, a host central processing unit (CPU) 230, GNSS application 232, and a memory 240.

The GNSS radio 210 may comprise suitable logic, circuitry, interfaces and/or code that may be operable to detect and receive GNSS signals from a plurality of visible GNSS satellites such as the GNSS satellite 122-126. The received GNSS signals may be utilized for various GNSS measurements such as pseudorange and/or carrier phase of corresponding broadcasting GNSS satellites. The GNSS radio 210 may provide the received GNSS signals to the host CPU 230 for further analysis.

A sensor such as the sensor 222a may comprise suitable logic, circuitry, interfaces and/or code that is operable to receive or collect non-GNSS data from various sensor targets such as the sensor targets 140. The collected non-GNSS sensor data may be communicated to the host CPU 230 for further analysis. The sensor 222a may be configured in various ways. For example, the sensor 222a may be configured as, for example, a cellular radio, a WiMAX radio, a Bluetooth radio, a WLAN radio, an image sensor, a light sensor, an audio sensor and/or a location sensor.

The host CPU 230 may comprise suitable logic, circuitry, interfaces and/or code that is operable to manage and/or handle operations of associated device components such as, for example, the GNSS radio 210, the sensors 222a-222c, and/or the GNSS application 232, depending on usages. For example, the host CPU 230 may be operable to activate or deactivate one or more associated device components such as the GNSS radio 210 as a needed basis to save power. The host CPU 230 may carry out various GNSS measurements such as pseudorange and/or carrier phase on the received GNSS signals. The host CPU 230 may provide the GNSS measurements to the GNSS application 232 for navigation information computation for the GNSS enabled device 200.

The GNSS application 232 may comprise suitable logic, interfaces and/or code that is operable to run or execute codes such as software libraries to supply or output navigation information for the GNSS enabled device 200. The input to the GNSS application 232 may comprise GNSS measurement data and non-GNSS measurement data such as hybrid navigation related non-GNSS sensor data collected via various sensors such as a light sensor and a cellular radio. In this regard, the collected navigation related non-GNSS sensor data may be automatically formatted or converted to the GNSS measurement data format supported by the GNSS application 232. The formatted navigation related non-GNSS sensor data may become input to the GNSS application 232 for navigation information computation regardless of corresponding sensor configurations or types. The resulting navigation information output from the GNSS application 232 may be utilized to support various applications such as a location-based application, and/or calibrate the collected navigation related non-GNSS sensor data and/or corresponding sensors 222a-222c.

The memory 240 may comprise suitable logic, circuitry, interfaces and/or code that may be operable to store information such as executable instructions and data that may be utilized by the host CPU 230 and/or other associated component units such as, for example, the GNSS radio 210 and/or the sensors 222a-222c. The memory 240 may comprise RAM, ROM, low latency nonvolatile memory such as flash memory and/or other suitable electronic data storage.

In an exemplary operation, the host CPU 230 of the GNSS enabled mobile device 200 may be operable to take GNSS measurements on GNSS signals received via the GNSS radio 210. The GNSS measurements may be collected to provide input to the GNSS application 232 to calculate navigation information such as GNSS position, speed and/or time for the GNSS enabled device 200. The host CPU 230 may also receive navigation related non-GNSS sensor data collected via the sensors 222a-222c, which may be configured in various ways such as a camera, a rate gyro, a terrain-model lookup table and/or a cellular radio. In this regard, the collected navigation related non-GNSS sensor data may comprise or indicate navigation information such as position, speed and/or time associated with corresponding sensor targets in one way or another. For example, signal strength of the collected navigation related non-GNSS sensor data may indicate relative distances between the GNSS enabled device 200 and corresponding sensor targets such as a WiFi access point. In another example, a sensor such as the sensor 222a may be configured as a cellular radio. Cellular Doppler for the corresponding collected non-GNSS sensor data may indicate or related to speed and/or heading information associated with the corresponding sensor targets such as a cellular base station.

Measurement errors such as RMSE may be evaluated or estimated for the collected navigation related non-GNSS sensor data in order to quantify or determine measurement accuracy. In this regard, the GNSS application 232 may discard the collected navigation related non-GNSS sensor data with low measurement accuracy (large measurement error) to remove erroneous measurements from navigation information computation. The GNSS application 232 may adopt or incorporate the collected navigation related non-GNSS sensor data with high measurement accuracy (less measurement error) for navigation information computation. The adopted navigation related non-GNSS sensor data may be formatted to the GNSS measurement data format. In this regard, non-GNSS data collected from various sensor targets such as, for example, a cellular base station, a WiFi access point, a Bluetooth device, a physical map and/or a navigation related vocal announcement, may be automatically formatted to become the input to the GNSS application 232 for navigation information computation. In this regard, the host CPU 230 may run the same GNSS application 232 over both GNSS measurement data and non-GNSS measurement data such as the formatted navigation related non-GNSS sensor data for navigation information computation regardless of where the input data originates. In addition, the GNSS application 232 may combine the GNSS measurement data with the formatted navigation related non-GNSS sensor data to compute navigation information for the GNSS enabled device 200. The resulting computed navigation information for the GNSS enabled device 200 may be utilized to calibrate sensors and/or non-GNSS sensor data collected via the corresponding sensors 222a-222c.

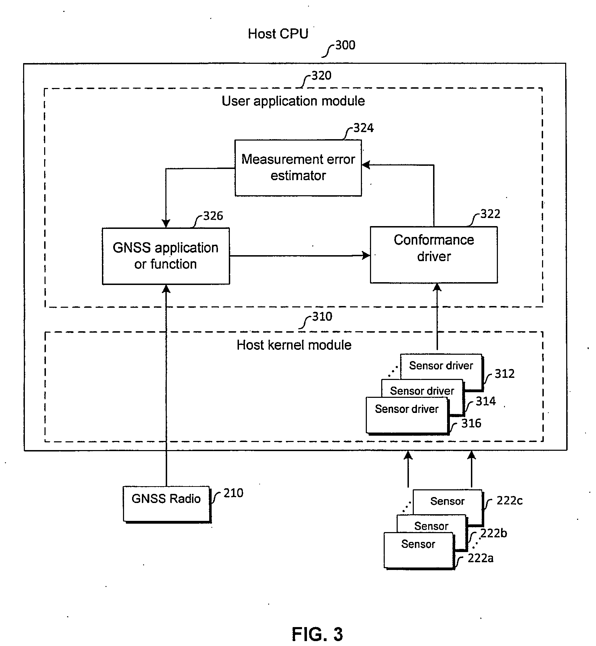

FIG. 3 is a diagram illustrating exemplary host CPU architecture of a GNSS enabled device for computing universal hybrid navigation information for the GNSS enabled device utilizing hybrid navigation related non-GNSS sensor data, in accordance with an embodiment of the invention. Referring to FIG. 3, there is shown a host CPU architecture 300 for the GNSS enabled device 200. The host CPU 300 comprises a host kernel module 310 and a user application module 320.

The host kernel module 310 may comprise suitable logic, interfaces and/or code that may be operable to manage and/or control resources for the host CPU 300. The host kernel module 310 may comprise a plurality of sensor drivers 212-216. Each sensor driver may be assigned or associated with a specific sensor. A sensor driver such as the sensor driver 312 may comprise suitable logic, interfaces and/or code that may be operable to enable communication between a sensor such as the sensor 222a and the host CPU 300. In this regard, the sensor driver 312 may be operable to receive non-GNSS sensor data collected via the sensor 222a. Depending on sensor configuration, the received non-GNSS sensor data may originate from various sensor targets such as a cellular base station, a WiFi access point, a Bluetooth device, and/or a physical map. The sensor driver 312 may forward or communicate the received non-GNSS sensor data to the user application module 320 for navigation information computation.

The user application module 320 may comprise suitable logic, interfaces and/or code that may be operable to control and manage user applications such as a GNSS application. The user application module 320 may comprise a conformance driver 322, a measurement error estimator 324 and GNSS application or function 326.

The conformance driver 322 may comprise suitable logic, interfaces and/or code that may be operable to convert or format navigation related non-GNSS sensor data to a data format that is similar to or otherwise compliant with a format of the GNSS measurement data. The conformance driver 322 may also be operable to receive navigation information, supplied from the GNSS application or function 326, for the GNSS enabled device 200. The conformance driver 322 may utilize the received navigation information to calibrate one or more sensors 312-316 and/or corresponding collected navigation related non-GNSS sensor data when appropriate.

The measurement error estimator 324 may comprise suitable logic, interfaces and/or code that may be operable to calculate or evaluate measurement errors such as RMSE in the collected navigation related non-GNSS sensor data to quantify or determine corresponding measurement accuracy. In this regard, the formatted navigation related non-GNSS sensor data with low measurement accuracy may be discarded to remove erroneous measurements from navigation information computation. The measurement error estimator 324 may time tag or time stamp the formatted navigation related non-GNSS sensor data with high measurement accuracy. The resulting time tagged or time stamped navigation related non-GNSS sensor data may become input to the GNSS application or function 326.

The GNSS application or function 326 may comprise a plurality of global location libraries (GLL) and/or code that may be utilized to compute navigation information for the GNSS enabled device 200. In this regard, the same GNSS application or function 326 may be utilized to adopt various non-GNSS sensor data, collected via sensors in various sensor configurations, for navigation information computation regardless of sensor types. In this regard, the GNSS application or function 326 may compute navigation information for the GNSS enabled device 200 with GNSS measurement data as well as non-GNSS measurement data such as the navigation related non-GNSS sensor data. To improve or enhance the accuracy of navigation information computation, the GNSS application or function 326 may combine the GNSS measurements with non-GNSS measurement data such as the collected navigation related non-GNSS sensor data to compute navigation information for the GNSS enabled device 200. The resulting computed navigation information may be provided or communicated to the conformance driver 322 for calibrating sensor data and/or sensors when appropriate.

In an exemplary operation, a sensor driver such as the sensor driver 312 may be loaded to the host kernel module 310. The loaded sensor driver 312 may receive non-GNSS sensor data, collected via an associated sensor such as the sensor 222a, from appropriate sensor targets. The collected non-GNSS sensor data may be communicated to the conformance driver 322. The conformance driver 322 may automatically convert or format the collected non-GNSS sensor data to the GNSS measurement data format. Measurement errors in the collected non-GNSS sensor data may be evaluated or estimated via the measurement error estimator 324. In this regard, various metric such as RMSE may be implemented to quantify or determine measurement accuracy of the collected non-GNSS sensor data. The measurement error estimator 324 may time tag or time stamp the formatted navigation related non-GNSS sensor data with high measurement accuracy. The resulting time tagged non-GNSS sensor data may become input to the GNSS application or function 326. In this regard, the GNSS application may combine the GNSS measurement data and non-GNSS measurement data such as the time tagged navigation related non-GNSS sensor data from the measurement error estimator 324 for navigation information computation. In this regard, the GNSS application or function 326 may incorporate non-GNSS measurement data to compute navigation information regardless of where the non-GNSS measurement data come from. The navigation information output from the GNSS application or function 326 may be provided to the conformance driver 322. The conformance driver 322 may utilize the navigation information from the GNSS application or function 326 to calibrate sensors and/or collected non-GNSS sensor data when appropriate.

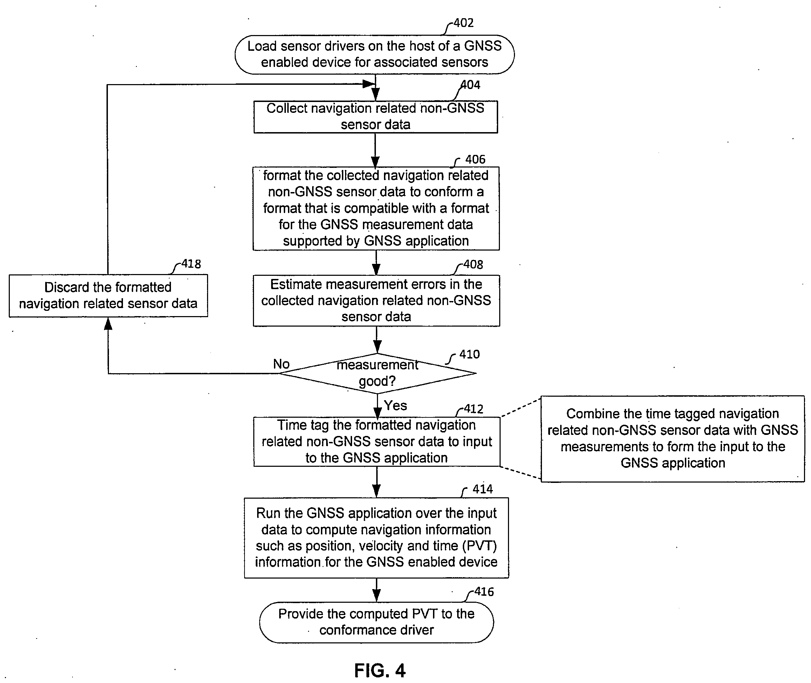

FIG. 4 is a flow chart illustrating exemplary steps that may be performed by a GNSS enabled device to incorporate hybrid navigation related non-GNSS sensor data to conform GNSS application, in accordance with an embodiment of the invention. Referring to FIG. 4, the exemplary steps may begin with step 402, in which the GNSS enabled device 200 is communicatively coupled with the GNSS radio 210 and the sensors 222a-222c that are in various sensor configurations. The sensor drivers 312-316 may be loaded onto the host kernel module 310 to enable communication between the host CPU 300 and the corresponding sensors 222a-222c. In step 404, the conformance driver 322 may receive, from the sensor drivers 312-316, navigation related non-GNSS sensor data that may be collected by the corresponding sensors 222a-222c from appropriate sensor targets 140. In step 406, the conformance driver 322 may automatically format or convert the collected navigation related non-GNSS sensor data to a format that is compatible with a format for the GNSS measurement data supported by the GNSS application or function 326. In step 408, the measurement error estimator 324 may be operable to estimate or determine measurement errors such as RMSE in the collected navigation related non-GNSS sensor data. In step 410, the measurement error estimator 324 may determine, based on the measurement error estimates, whether the collected navigation related non-GNSS sensor data is good or accurate for navigation information computation.

In instances where the collected navigation related non-GNSS sensor data is good for navigation information computation, then in step 412, in which the error measurement estimator 324 may time tag the corresponding formatted navigation related non-GNSS sensor data and input the resulting time tagged non-GNSS sensor data to the GNSS application or function 326. In this regard, the host CPU 300 may signal the GNSS application or function 326 to combine the GNSS measurements with the time tagged navigation related non-GNSS sensor data for navigation information computation. In step 414, the host CPU 300 may control operation of the GNSS application or function 326 utilizing the input data to compute navigation information such as GNSS position, velocity and/or time for the GNSS enabled device 200. In step 416, the resulting computed navigation information from the GNSS application or function 326 may be provided to the conformance driver 322.

In step 410, in instances where the collected navigation related non-GNSS sensor data is not good or less accurate for navigation information computation, then in step 418, in which the collected navigation related non-GNSS sensor data may be discarded to remove erroneous measurements from navigation information computation. The exemplary steps may return to step 404.

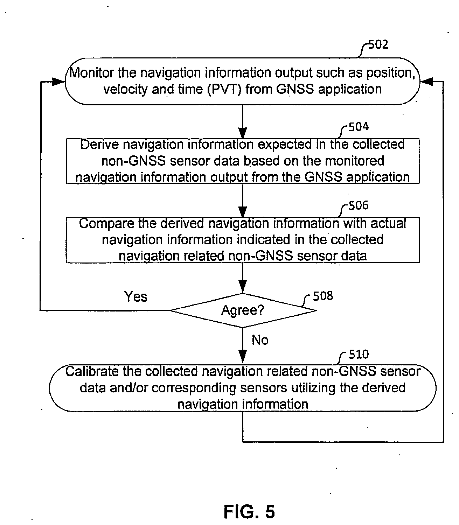

FIG. 5 is a flow chart illustrating exemplary steps that may be performed by a GNSS enabled device to calibrate collected non-GNSS sensor data utilizing universal hybrid navigation information for the GNSS enabled device, in accordance with an embodiment of the invention. Referring to FIG. 5, the exemplary steps may begin with step 502, in which the GNSS enabled device 200 is communicatively coupled with the GNSS radio 210 and the sensors 222a-222c in various sensor configurations. The GNSS application or function 326 may adopt GNSS measurement data as well as non-GNSS measurement data such as various navigation related non-GNSS sensor data to compute (universal hybrid) navigation information for the GNSS enabled device 200. The conformance driver 326 may monitor or track the navigation information output from the GNSS application or function 326. In step 504, the conformance driver 322 may derive or estimate navigation information expected in the collected non-GNSS sensor data based on the navigation information output from the GNSS application or function 326. In step 506, the conformance driver 322 may compare the derived navigation information with the actual navigation information indicated in the collected navigation related non-GNSS sensor data. In step 508, the conformance driver 322 may determine whether the derived navigation information agrees or matches the actual navigation information for the collected navigation related non-GNSS sensor data. In instances where the derived navigation information does not agree or match the actual navigation information for the collected non-GNSS sensor data, then in step 510, in which the conformance driver 322 may utilize the derived navigation information to calibrate the non-GNSS sensor data and/or corresponding sensors. The exemplary steps may return to step 502.

In step 508, in instances where the derived navigation information agrees or matches the actual navigation information for the collected navigation related non-GNSS sensor data, then the exemplary steps may return to step 502.

Various aspects of a method and system for computing universal hybrid navigation information for a GNSS enabled device are provided. In various exemplary embodiments of the invention, the GNSS enabled device 112 may be operable to manage or handle various device components such as the GNSS radio 210 and a plurality of sensors 222a-222c via the host CPU 230. The GNSS enabled device 112 may take various GNSS measurements on GNSS signals received via the GNSS radio 210. The GNSS measurements may be collected and stored in the memory 240 utilized to compute navigation information such as position, velocity and/or time for the GNSS enabled device 112 by a single function such as the GNSS application or function 326. The GNSS enabled device 112 may also receive navigation related non-GNSS sensor data from the sensor drivers 312-316 that are collected via at least two of the sensors 222a-222c from the corresponding sensor targets such as a cellular base station, a rate gyro and a terrain-model look-up table. The conformance driver 322 may format the collected navigation related non-GNSS sensor data into a data format of the GNSS measurements. The resulting formatted navigation related non-GNSS sensor data may be combined with the GNSS measurements to form or become input to the single function, that is the GNSS application or function 326. In this regard, the GNSS application or function 326 may incorporate the collected navigation related non-GNSS sensor data to compute navigation information for the GNSS enabled device 112 regardless of sensor configurations or types. For example, a sensor such as the sensor 222 may be configured as a cellular radio, a Wireless LAN (WLAN) or WiFi radio, a ZigBee radio, a Bluetooth radio, an FM radio, a magnetic sensor, a motion sensor, an image sensor, a sonar sensor, a pressure sensor and/or a rate gyroscope.

The GNSS enabled device 112 may be operable to estimate measurement errors in the collected navigation related non-GNSS sensor data via the measurement error estimator 324. Various metric such as RMSE may be utilized for the measurement error estimation. Measurement accuracy for the collected navigation related non-GNSS sensor data may be quantified or determined based on the measurement error estimation. The collected navigation related non-GNSS sensor data with low measurement accuracy (more measurement errors) may be discarded so as to remove erroneous measurements from the collected navigation related non-GNSS sensor data. The measurement error estimator 324 may selectively adopt the formatted navigation related non-GNSS sensor data based on the corresponding determined measurement accuracy. The measurement error estimator 324 may time tag or time stamp the adopted navigation related non-GNSS sensor data to provide the resulting time tagged navigation related non-GNSS sensor data to the GNSS application or function 326. The GNSS application or function 326 may combine the GNSS measurements with the time tagged navigation related non-GNSS sensor data to compute navigation information for the GNSS enabled device 112. The resulting navigation information to the GNSS enabled device may provide to the conformance driver 322. In this regard, the conformance driver 322 may calibrate sensor data collected via the sensors 222a-222c to improve the accuracy of navigation information computation. The conformance driver 322 may also be utilized to calibrate the one or more sensors 222a-222c based on the computed navigation information for the GNS enabled device when appropriate.

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for computing an universal hybrid location for a GNSS enabled device.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for processing signals, the method comprising:
in a global navigation satellite system (GNSS) enabled device (112, 114, 116, 200) that is operable to handle a plurality of sensors (132, 134, 136, 222a, 222b, 222c):
collecting GNSS measurements and navigation related non-GNSS sensor data;
estimating measurement errors in said collected navigation related non-GNSS sensor data;
determining measurement accuracy for said collected navigation related non-GNSS sensor data based on said measurement error estimation;
removing from said collected navigation related non-GNSS sensor data collected navigation related non-GNSS sensor data with low determined measurement accuracy for obtaining an adopted collected navigation related non-GNSS sensor data with higher determined measurement accuracy;
formatting said adopted collected navigation related non-GNSS sensor data into a data format that is compliant with a format of said collected GNSS measurements;
time tagging said formatted adopted navigation related non-GNSS sensor data; and
computing by a single function, navigation information for said GNSS enabled device utilizing said collected GNSS measurements and said time tagged non-GNSS sensor data by combining said collected GNSS measurements with said time tagged navigation related non-GNSS sensor data to compute said navigation information, by said single function, for said GNSS enabled device.

2. The method of claim 1, wherein said plurality of sensors comprise at least two of a cellular radio, a Wireless LAN (WiFi) radio, a Bluetooth radio, an FM radio, a magnetic sensor, a motion sensor, a rate gyroscope, a pressure sensor, an image sensor, and/or a sonar sensor.

3. The method according to claim 1, comprising selectively adopting said collected navigation related non-GNSS sensor data based on said determined measurement accuracy.

4. A system for processing signals, the system comprising:
one or more circuits for use in a global navigation satellite system (GNSS) enabled device (112, 114, 116, 200) that is operable to handle a plurality of sensors (132, 134, 136, 222a, 222b, 222c), said one or more circuits being operable to:
collect GNSS measurements and navigation related non-GNSS sensor data;
estimate measurement errors in said collected navigation related non-GNSS sensor data;
determine measurement accuracy for said collected navigation related non-GNSS sensor data based on said measurement error estimation;
remove from said collected navigation related non-GNSS sensor data collected navigation related non-GNSS sensor data with low determined measurement accuracy for obtaining an adopted collected navigation related non-GNSS sensor data with higher determined measurement accuracy;
format said adopted collected navigation related non-GNSS sensor data into a data format that is compliant with a format of said collected GNSS measurements;
time tag said formatted adopted navigation related non-GNSS sensor data; and compute by a single function, navigation information for said GNSS enabled device utilizing said collected GNSS measurements and said time tagged non-GNSS sensor data by combining said collected GNSS measurements with said time tagged navigation related non-GNSS sensor data to compute said navigation information, by said single function, for said GNSS enabled device.

5. The system according to claim 4, wherein said plurality of sensors comprise at least two of a cellular radio, a Wireless LAN (WiFi) radio, a Bluetooth radio, an FM radio, a magnetic sensor, a motion sensor, a rate gyroscope, a pressure sensor, an image sensor, and/or a sonar sensor.

6. The system according to claim 4, wherein said one or more circuits are operable to selectively adopt said collected navigation related non-GNSS sensor data based on said determined measurement accuracy.

## Patentansprüche

1. Verfahren zum Verarbeiten von Signalen, wobei das Verfahren umfasst:
- in einer GNSS- (Global Navigation Satellite System/globales Navigationssatellitensystem) fähigen Einrichtung (112, 114, 116, 200), die betriebsfähig dafür ausgelegt ist, eine Mehrzahl Sensoren (132, 134, 136, 222a, 222b, 222c) handzuhaben:
- Erfassen von GNSS-Messungen und navigationsbezogenen Nicht-GNSS-Sensordaten,
- Schätzen von Messfehlern in den erfassten navigationsbezogenen Nicht-GNSS-Sensordaten,
- Bestimmen einer Messgenauigkeit für die erfassten navigationsbezogenen Nicht-GNSS-Sensordaten basierend auf der Messfehlerschätzung,
- Entfernen von erfassten navigationsbezogenen Nicht-GNSS-Sensordaten mit geringer bestimmter Messgenauigkeit aus den erfassten navigationsbezogenen Nicht-GNSS-Sensordaten, um angewandte erfasste navigationsbezogene Nicht-GNSS-Sensordaten mit höherer bestimmter Messgenauigkeit zu erhalten,
- Formatieren der angewandten erfassten navigationsbezogenen Nicht-GNSS-Sensordaten in ein Datenformat, das mit einem Format der erfassten GNSS-Messungen kompatibel ist,
- Versehen der formatierten angewandten navigationsbezogenen Nicht-GNSS-Sensordaten mit Zeitmarken, und
- Berechnen, durch eine einzelne Funktion, von Navigationsinformationen für die GNSS-fähige Einrichtung unter Nutzung der erfassten GNSS-Messungen und der mit Zeitmarken versehenen Nicht-GNSS-Sensordaten durch Kombinieren der erfassten GNSS-Messungen mit den mit Zeitmarken versehenen navigationsbezogenen Nicht-GNSS-Sensordaten, um durch die einzelne Funktion die Navigationsinformationen für die GNSS-fähige Einrichtung zu berechnen.

2. Verfahren nach Anspruch 1, wobei die Mehrzahl Sensoren wenigstens zwei Zellularfunkgeräte, drahtlose LAN- (WiFi-) Funkgeräte, Bluetooth-Funkgeräte, FM-Funkgeräte, Magnetsensoren, Bewegungssensoren, Wendekreisel, Drucksensoren, Bildsensoren und/oder Schallsensoren umfasst.

3. Verfahren nach Anspruch 1, das ein selektives Anwenden der erfassten navigationsbezogenen Nicht-GNSS-Sensordaten basierend auf der bestimmten Messgenauigkeit umfasst.

4. System zum Verarbeiten von Signalen, wobei das System umfasst:
- eine oder mehrere Schaltungen zur Verwendung in einer GNSS- (Global Navigation Satellite System/globales Navigationssatellitensystem) fähigen Einrichtung (112, 114, 116, 200), die betriebsfähig dafür ausgelegt ist, eine Mehrzahl Sensoren (132, 134, 136, 222a, 222b, 222c) handzuhaben, wobei die eine oder mehreren Schaltungen betriebsfähig dafür ausgelegt sind:
- GNSS-Messungen und navigationsbezogene Nicht-GNSS-Sensordaten zu erfassen,
- Messfehler in den erfassten navigationsbezogenen Nicht-GNSS-Sensordaten zu schätzen,
- basierend auf der Messfehlerschätzung eine Messgenauigkeit für die erfassten navigationsbezogenen Nicht-GNSS-Sensordaten zu bestimmen,
- erfasste navigationsbezogene Nicht-GNSS-Sensordaten mit geringer bestimmter Messgenauigkeit aus den erfassten navigationsbezogenen Nicht-GNSS-Sensordaten zu entfernen, um angewandte erfasste navigationsbezogene Nicht-GNSS-Sensordaten mit höherer bestimmter Messgenauigkeit zu erhalten,
- die angewandten erfassten navigationsbezogenen Nicht-GNSS-Sensordaten in ein Datenformat zu formatieren, das mit einem Format der erfassten GNSS-Messungen kompatibel ist,
- die formatierten angewandten navigationsbezogenen Nicht-GNSS-Sensordaten mit Zeitmarken zu versehen, und
- durch eine einzelne Funktion Navigationsinformationen für die GNSS-fähige Einrichtung unter Nutzung der erfassten GNSS-Messungen und der mit Zeitmarken versehenen Nicht-GNSS-Sensordaten durch Kombinieren der erfassten GNSS-Messungen mit den mit Zeitmarken versehenen navigationsbezogenen Nicht-GNSS-Sensordaten zu berechnen, um durch die einzelne Funktion die Navigationsinformationen für die GNSS-fähige Einrichtung zu berechnen.

5. System nach Anspruch 4, wobei die Mehrzahl Sensoren wenigstens zwei Zellularfunkgeräte, drahtlose LAN- (WiFi-) Funkgeräte, Bluetooth-Funkgeräte, FM-Funkgeräte, Magnetsensoren, Bewegungssensoren, Wendekreisel, Drucksensoren, Bildsensoren und/oder Schallsensoren umfasst.

6. System nach Anspruch 4, wobei die eine oder mehreren Schaltungen betriebsfähig dafür ausgelegt sind, basierend auf der bestimmten Messgenauigkeit die erfassten navigationsbezogenen Nicht-GNSS-Sensordaten selektiv anzuwenden.

## Revendications

1. Procédé de traitement de signaux, le procédé consistant à :
dans un dispositif (112, 114, 116,200) activé par système mondial de navigation par satellite (GNSS) qui peut être utilisé pour gérer une pluralité de capteurs (132, 134, 136, 222a, 222b, 222c) :
collecter des mesures GNSS et des données de capteursnon GNSS liées à la navigation ;
estimer des erreurs de mesure dans lesdites données de capteurs non GNSS liées à la navigation collectées ;
déterminer une précision de mesure pour lesdites données de capteurs non GNSS liées à la navigation collectées sur la base de ladite estimation d'erreur de mesure ;
supprimer desdites données de capteurs non GNSS liées à la navigation collectées les données de capteurs non GNSS liées à la navigation collectées ayant une faible précision de mesure déterminée pour obtenir des données de capteurs non GNSS liées à la navigation collectées adoptées ayant une précision plus élevée de mesure déterminée ;
formater lesdites données de capteurs non GNSS liées à la navigation collectées adoptées en un format de données qui est compatible avec un format desdites mesures GNSS collectées ;
marquer temporellement lesdites données de capteurs non GNSS liées à la navigation adoptées formatées ; et
calculer, grâce à une fonction unique, des informations de navigation pour ledit dispositif activé par GNSS à l'aide desdites mesures GNSS collectées et desdites données de capteurs non GNSS marquées temporellement en combinant lesdites mesures GNSS collectées avec ladite navigation marquée temporellement liée aux données de capteurs non GNSS pour calculer lesdites informations de navigation, grâce à ladite fonction unique, pour ledit dispositif activé par GNSS.

2. Procédé selon la revendication 1, dans lequel ladite pluralité de capteurs comprend au moins deux éléments parmi une radio cellulaire, une radio LAN sans fil (WiFi), une radio Bluetooth, une radio FM, un capteur magnétique, un capteur de mouvement, un gyromètre, un capteur de pression, un capteur d'image et/ou un capteur sonar.

3. Procédé selon la revendication 1, consistant à adopter sélectivement lesdites données de capteurs non GNSS liées à la navigation collectées sur la base de ladite précision de mesure déterminée.

4. Système de traitement de signaux, le système comprenant :
un ou plusieurs circuits destinés à une utilisation dans un dispositif (112, 114, 116,200) activé par système mondial de navigation par satellite (GNSS) qui peut être utilisé pour gérer une pluralité de capteurs (132, 134, 136, 222a, 222b, 222c), lesdits un ou plusieurs circuits fonctionnant de manière à :
collecter des mesures GNSS et des données de capteursnon GNSS liées à la navigation ;
estimer des erreurs de mesure dans lesdites données de capteurs non GNSS liées à la navigation collectées ;
déterminer une précision de mesure pour lesdites données de capteurs non GNSS liées à la navigation collectées sur la base de ladite estimation d'erreur de mesure ;
supprimer desdites données de capteurs non GNSS liées à la navigation collectées les données de capteurs non GNSS liées à la navigation collectées ayant une faible précision de mesure déterminée pour obtenir des données de capteurs non GNSS liées à la navigation collectées adoptées ayant une précision plus élevée de mesure déterminée ;
formater lesdites données de capteurs non GNSS liées à la navigation collectées adoptées en un format de données qui est compatible avec un format desdites mesures GNSS collectées ;
marquer temporellement lesdites données de capteurs non GNSS liées à la navigation adoptées formatées ; et
calculer, grâce à une fonction unique, des informations de navigation pour ledit dispositif activé par GNSS à l'aide desdites mesures GNSS collectées et desdites données de capteurs non GNSS marquées temporellement en combinant lesdites mesures GNSS collectées avec ladite navigation marquée temporellement liée aux données de capteurs non GNSS pour calculer lesdites informations de navigation, grâce à ladite fonction unique, pour ledit dispositif activé par GNSS.

5. Système selon la revendication 4, dans lequel ladite pluralité de capteurs comprend au moins deux éléments parmi une radio cellulaire, une radio LAN sans fil (WiFi), une radio Bluetooth, une radio FM, un capteur magnétique, un capteur de mouvement, un gyromètre, un capteur de pression, un capteur d'image et/ou un capteur sonar.

6. Système selon la revendication 4, dans lequel lesdits un ou plusieurs circuits fonctionnent de manière à adopter sélectivement lesdites données de capteurs non GNSS liées à la navigation collectées sur la base de ladite précision de mesure déterminée.
